# EUROPÄISCHE PATENTSCHRIFT

(11) **EP 2 399 071 B1**
(45) Veröffentlichungstag und Bekanntmachung des Hinweises auf die Patenterteilung: **22.08.2018**
(21) Anmeldenummer: 10708158.0
(22) Anmeldetag: 19.02.2010
(51) Int. Cl.: F22D 1/50

(54) **SPEISEWASSERENTGASER EINES SOLARTHERMISCHEN KRAFTWERKS**
FEED WATER DEGASIFIER FOR A SOLAR THERMAL POWER STATION
DÉGAZEUR D'EAU D'ALIMENTATION D'UNE CENTRALE HÉLIOTHERMIQUE

(30) Priorität: 21.02.2009 DE 102009010020
(43) Veröffentlichungstag der Anmeldung: 28.12.2011
(73) Patentinhaber: TSK Flagsol Engineering GmbH, 50678 Köln (DE)
(72) Erfinder: ELLERT, Ronald, 69181 Leimen (DE)
(74) Vertreter: Viering, Jentschura & Partner mbB Patent- und Rechtsanwälte
(86) Internationale Anmeldenummer: PCT/EP2010/052163
(87) Internationale Veröffentlichungsnummer: WO 2010/094783

(56) Entgegenhaltungen:
- EP-A1- 0 180 093
- WO-A1-96/36792
- DE-A1- 19 538 670
- US-A- 4 465 027
- KANE M ET AL: "APPROCHE DE CONCEPTION ET D'OPTIMISATION DE CENTRALE SOLAIRE INTEGREE A CYCLE COMBINE INSPIREE DE LA METHODE DU PINCEMENT (PARTIE 1: PALIERS DE RECUPERATION)", REVUE GENERALE DE THERMIQUE, ELSEVIER EDITIONS SCIENTIFIQUES ET MEDICALES,PARIS, FR, Bd. 38, Nr. 6, 1. Juni 1999 (1999-06-01), Seiten 501-511, XP000832038, ISSN: 0035-3159, DOI: DOI:10.1016/S0035-3159(99)80049-X

## Beschreibung

Die Erfindung richtet sich auf einen Speisewasserentgaser umfassend einen Entgaser mit angeschlossenem Speisewassertank, welche in dem Wasser/Dampfkreislauf eines einen Wärmeträgermediumkreislauf mit zugeordnetem Wasser/Dampfkreislauf aufweisenden solarthermischen Kraftwerks eingebunden sind. Weiterhin richtet sich die Erfindung auf ein solarthermisches Kraftwerk mit einem solchen Speisewasserentgaser sowie auf ein Verfahren zur Speisewasserentgasung und/oder Speisewassererwärmung von im Wasser/Dampfkreislauf eines solarthermischen Kraftwerks in einem Speisewassertank mit Entgaser bereitgestelltem Speisewasser.

Solarthermische Kraftwerke weisen häufig einen Wärmeträgermediumkreislauf und einen damit über Wärmeaustauscher gekoppelten Wasser/Dampfkreislauf mit darin angeordneter Dampfturbine zur Umsetzung thermischer Energie in mechanische Energie sowie mit einem angeschlossenen Generator zur Erzeugung von elektrischer Energie auf. Hierbei wird beispielsweise mit Hilfe von parabolspiegelförmigen Solarelementen, die in einzelnen Solarsträngen zu einem Solarfeld zusammengestellt sind, Sonnenenergie gezielt auf Absorber gelenkt, in welchen das Wärmeträgermedium fließt. In solchen Spiegel- oder Solarfeldern wird die thermische Energie auf diese Weise in einem so genannten HTF-System (Heat Transfer Fluid-System) auf das Wärmeträgermedium, üblicherweise ein Thermoöl, übertragen. Dieses Thermoöl des Wärmeträgermediumkreislaufes gibt dann in Wärmetauschern seine thermische Energie an das im Wasser/Dampfkreislauf geführte Wasser ab. In dem HTF-System wird das Wärmeträgermedium Thermoöl auf ca. 400 °C aufgeheizt, welches durch Wärmeübertragung auf das im Wasser/Dampfkreislauf geführte Wasser einen Dampf von ca. 390°C und 100 bar entstehen lässt. Mit Hilfe des Dampfes wird dann die mindestens eine Dampfturbine mit angeschlossenem Generator betrieben, welcher danach kondensiert und dann wieder als Wasser im Wasser/Dampfkreislauf geführt wird.

In den Wärmeträgermediumkreislauf integriert kann auch ein thermische Speicher (TES) vorgesehen sein, welchem ein Teil des Wärmeträgermediums zugeführt wird, welches dann in dem Speicher thermische Energie an ein Speichermedium abgibt. In Zeiten fehlenden Sonnenscheins kann dann das Wärmespeichermaterial bzw. das Speichermedium des thermischen Speichers die gespeicherte thermische Energie wieder an das Wärmeträgermedium abgeben und damit nutzbar machen.

Das im Wasser/Dampfkreislauf geführte Wasser muss zur Aufrechterhaltung der Funktionsweise des Wasser/Dampfkreislaufes regelmäßig aufbereitet werden. Die Wasser/Dampf-Kreisläufe thermischer Kraftwerke, die nach dem so genannten Clausius-Rankine-Kreisprozess arbeiten, wozu der Dampf/Wasserkreislauf solarthermischer Kraftwerke regelmäßig gehört, enthalten eine als Entgaser oder Speisewasserentgaser bezeichnete apparative Einrichtung, in welcher das so genannte Hauptkondensat, welches aus dem kondensierten Abdampf der Dampfturbine(n) und vollentsalztem Zusatzwasser besteht, zu Kessel-Speisewasser aufbereitet und in einem zugeordneten Speisewassertank vorgehalten oder bereitgestellt wird. Dieses Aufbereiten des Speisewassers umfasst die Entgasung des Hauptkondensates durch Austreiben und Abführen nicht kondensierbarer Gase wie Stickstoff, Kohlendioxid und Sauerstoff durch mechanisches Verrieseln des Kondensats im Entgaser und insbesondere durch eine dort erfolgende Erwärmung des Kondensates um 15 bis 30 K. Weiterhin umfasst das Aufbereiten die Kontrollierung und Einstellung eines einzuhaltenden pH-Wertes, was durch Eindosierung und/oder Nachdosierung von Ammoniak erreicht wird. Ebenso ist die Kontrolle und die Einstellung des (Rest-)Sauerstoffgehaltes im Wasser wichtig, was gegebenenfalls durch Erhöhen des Brüdendampfstroms am oberen Klöpperboden des Entgasers erfolgt. Schließlich umfasst die Aufbereitung des Hauptkondensates zu Speisewasser die kontinuierliche (Zwischen-)Speicherung des aufbereiteten (Kessel-)Speisewassers im Speisewasserbehälter oder Speisewassertank, um kontinuierlich und permanent Speisewasser bereitzuhalten, das über so genannte Hochdruck-Speisewasserpumpen dann jederzeit dem Dampferzeuger zugeführt werden kann.

Weiterhin weisen die bekannten solarthermischen Kraftwerke häufig so genannte "Hilfskessel"-Systeme oder "Hilfskessel" auf, die dem Wasser/Dampfkreislauf zugeordnet und/oder in diesen integriert sind. Diese Hilfskessel-Systeme sind notwendig, um im Stand-by-Modus und beim An- und Abfahren des Wasser/Dampfkreislauf für den Prozess dennoch notwendigen Dampf produzieren können. Diese Hilfskessel-Systeme sind in der Regel fossilbefeuert und müssen beispielsweise Sperrdampf für die Wellenabdichtungen der Dampfturbinen, Treibdampf für die Vakuumpumpen zum Evakuieren des Dampfturbinenabdampfkondensators und der Hauptkondensat- und Hochdruck-Speisewasser-Vorwärmer bereitstellen. Außerdem wird durch diese Hilfskessel-Systeme Heizdampf dem Entgaser mit angeschlossenem Speisewassertank für die notwendigen Erwärmung und Entgasung von Hauptkondensat zu Zeiten außerhalb des regulären Dampferzeuger- und/oder Dampfturbinen-Betriebes zur Verfügung gestellt. Diese "Hilfskessel"-Systeme oder "Hilfskessel" werden aber nicht aus dem oder den Speisewassertank(s) des regulären Haupt-Wasser/Dampfkreislaufs des solarthermischen Kraftwerks mit Wasser gespeist, sondern weisen eine davon getrennte eigene Wasserversorgung auf.

Ein solches Hilfskessel-System, insbesondere dann, wenn es fossil befeuert ist, reduziert sofort die Umweltfreundlichkeitsbilanz eines solarthermischen Kraftwerkes aufgrund des damit verbundenen CO₂-Austausches. Insbesondere sind solche Hilfskessel-Systeme anlagentechnisch relativ aufwändige Zusatzaggregate, die zudem eine aufwändige, empfindliche und schwer einzuregelnde Steuerung notwendig machen.

Die US 4 465 027 A offenbart, dass Speisewasser zwischen einem Speisewassertank und einem Zusatzverdampfer als Naturumlauf bewegt werden kann.

Aus der EP 0 180 093 A1 ist bekannt, dass einem Speisewasserbehälter als Zusatzverdampfer ein Abgaswärmetauscher zugeordnet ist, der aber nicht unmittelbar in dampfseitiger Leitungsverbindung zum Dampfbereich des Speisewassertanks steht und der zum anderen auch nicht in örtlich unmittelbarer Nähe zum Speisewassertank steht.

Die WO 96/36792 A1 offenbart ebenfalls einen Speisewasserentgaser dessen Speisewassertank wasserseitig mit einem Kondensatvorwärmer in Leitungsverbindung steht und dessen Dampfbereich ebenfalls mit dem Kondensatvorwärmer in Leitungsverbindung steht.

Aus KANE M ET AL, "APPROCHE DE CONCEPTION ET D'OPTIMISATION DE CENTRALE SOLAIRE INTEGREE A CYCLE COMBINE INSPIREE DE LA METHODE DU PINCEMENT (PARTIE 1: PALIERS DE RECUPERATION)", REVUE GENERALE DE THERMIQUE, ELSEVIER EDITIONS SCIENTIFIQUES ET MEDICALES, PARIS, FR, (19990601), Vl. 38, Nr. 6, doi:DOI:10.1016/S0035-3159(99)80049-X, ISSN 0035-3159, Seiten 501 - 511, sind ein Speisewasserentgaser umfassend einen Entgaser mit angeschlossenem Speisewassertank bekannt, welche in den Wasser/Dampfkreislauf eines einen Wärmeträgermediumkreislauf mit zugeordnetem Wasser/Dampfkreislauf aufweisenden solarthermischen Kraftwerks eingebunden sind, wobei dem Speisewassertank mindestens ein Zusatzverdampfer (HRSG) mit wasserseitiger Leitungsverbindung zum Speisewasserbereich des Speisewassertanks und mit dampfseitiger Leitungsverbindung zum Dampfbereich des Speisewassertanks zugeordnet ist.
Aus der DE 195 38 670 A1 ist ein gattungsgemäßer Speisewasserentgaser bekannt. In dem hieraus bekannten Solarkraftwerk wird erzeugter Nassdampf in einen Wasser-Dampf-Kreislauf eines fossil befeuerten Kraftwerks eingespeist. Der aus einer Dampfturbine austretende Dampf wird in einem Kondensator verflüssigt und von einer ersten Speisewasserpumpe dem Abhitzedampferzeuger zugeführt. Der Abhitzedampferzeuger umfasst einen Vorwärmer, einen Verdampfer, einen Überhitzer und ein Wasser-Dampf-Trenngefäß. Das Wasser durchströmt zunächst den Vorwärmer und gelangt in das Wasser-Dampf-Trenngefäß. Der Wasserdampf aus dem Wasser-Dampf-Trenngefäß wird über den Überhitzer wieder in die Dampfturbine geführt, so dass der Wasser-Dampf-Kreislauf wieder geschlossen ist.

Der Erfindung liegt die Aufgabe zugrunde, eine Lösung zu schaffen, die eine heiz- und regelungstechnisch weniger aufwändige Möglichkeit zur Beaufschlagung des Entgasers mit (Heiz-)Dampf bereitstellt.

Insbesondere soll auch die Möglichkeit geschaffen werden, außerhalb des regulären "Normal"-Dampferzeuger- und Dampfturbinenbetriebs für die Betriebsphasen eines Stand-by-Betriebs und/oder eines Anfahr- und/oder Abfahr-Betriebs des Wasser/Dampf-Kreislaufes eines solarthermischen Kraftwerks Dampf und/oder warmes Speisewasser bereitzustellen.

Bei einem Speisewasserentgaser und einem solarthermischen Kraftwerk der eingangs bezeichneten Art wird diese Aufgabe erfindungsgemäß jeweils dadurch gelöst, dass dem Speisewassertank mindestens ein als Thermoöl-beheizter Naturumlaufverdampfer ausgebildeter zugeordnet ist, der eine wasserseitige Leitungsverbindung zum mit Speisewasser gefüllten Speisewasserbereich des Speisewassertanks und eine dampfseitige Leitungsverbindung zum über dem Speisewasserbereich ausgebildeten Dampfbereich des Speisewassertanks aufweist und der mittels eines aus dem Wärmeträgermediumkreislauf abgezweigten Teilstroms des Wärmeträgermediums Thermoöl des Wärmeträgermediumkreislaufs beheizbar oder beheizt ist, wobei die Kombination aus Entgaser, Speisewassertank und Zusatzverdampfer regelbar Hilfsdampf in einer Massenstrombandbreite von 0,22 - 5 kg Dampf/s für den Wasser/Dampfkreislauf bereithält.

Bei einem Verfahren der eingangs bezeichneten Art wird diese Aufgabe erfindungsgemäß dadurch gelöst, dass zumindest ein Teil des Speisewassers einem dem Speisewassertank mit Entgaser zugeordneten als Thermoöl-beheizter Naturumlaufverdampfer ausgebildeter Zusatzverdampfer zugeführt wird, der eine wasserseitige Leiungsverbindung zum mit Speisewasser gefüllten Speisewasserbereich des Speisewassertanks und eine dampfseitige Leitungsverbindung zum über dem Speisewasserbereich ausgebildeten Dampfbereich des Speisewassertanks aufweist, darin verdampft und der Dampf in den Dampfbereich des Speisewassertanks rückgeführt wird, wobei der Zusatzverdampfer von einem aus dem Wärmeträgermediumkreislauf abgezweigten Teilstrom des Wärmeträgermediums Thermoöl des Wärmeträgermediumkreislaufs beheizt wird, und wobei mittels der Kombination aus Entgaser, Speisewassertank und Zusatzverdampfer regelbar Hilfsdampf in einer Massenstrombandbreite von 0,22 - 5 kg Dampf/s für den Wasser/Dampfkreislauf bereit gehalten wird..

Vorteilhafte Ausgestaltungen und zweckmäßige Weiterbildungen der Erfindungsgegenstände ergeben sich aus den jeweiligen Unteransprüchen.

Durch die Erfindung wird dem Speisewassertank des Entgasers unmittelbar mindestens ein Zusatzverdampfer zugeordnet, der sich vorteilhafterweise auch in örtlich unmittelbarer Nähe des Speisewassertankes befindet. Dadurch wird es möglich, einen Naturumlauf zwischen dem Speisewassertank und dem Zusatzverdampfer auf kurzem Wege zu realisieren, der heiz- und regelungstechnisch unproblematisch zu handhaben ist. Insgesamt wird damit die Möglichkeit geschaffen, Entgaser mit angeschlossenem Speisewassertank in wenig aufwändiger Weise mit Heizdampf versorgen zu können. Durch die Erfindung wird es möglich, einen Entgaser mit Speisewassertank zu einer multifunktionalen, thermischen Entgaser-, Vorwärm- und Hilfsdampf-Erzeugeranlage zu machen. Eine solche Anlage kann für ein zügiges, aber dennoch schonendes Anfahren und Abfahren eines solarthermischen Kraftwerkes genutzt werden und macht eine ansonsten üblicherweise vorgesehene, deutlich größer dimensionierte Hilfskesselanlage überflüssig. Hierbei ist der Begriff "Zusatzverdampfer" deshalb gewählt worden, weil der Wasser/Dampfkreislauf des solarthermischen Kraftwerks natürlich einen Dampferzeuger aufweist, der Verdampfer, Überhitzer, Zwischenüberhitzer, etc. umfasst, die aber weiter entfernt und zusätzlich zum Zusatzverdampfer vorhanden sind.

Von besonderem Vorteil ist eine solche unmittelbare Zuordnung eines Zusatzverdampfers dann, wenn der mindestens eine Zusatzverdampfer durch das Wärmeträgermedium des Wärmeträgermediumkreislaufes beheizbar und/oder beheizt ist, wie dies die Erfindung vorsieht. Hierdurch lässt sich ein beispielsweise Thermoöl-beheizter Naturumlauf-Verdampfer schaffen, der keine gesonderte, eigene fossil erzeugte Befeuerung mehr notwendig macht und der dem Wasser/Dampfkreislauf für das Warmhalten sowie für das An- und Abfahren des solarthermischen Kraftwerkes entgastes und vorgewärmtes Speisewasser zur Verfügung stellt.

Bei dem Wärmeträgermedium handelt es sich um ein flüssiges, üblicherweise verwendetes Thermoöl.
Um den erfindungsgemäßen Speisewasserentgaser und den Speisewassertank ohne Änderungen an üblichen Wasser/Dampfkreislaufsystemen in diese integrieren und an einen Wasser/Dampfkreislauf anschließen zu können, ist gemäß weiterer Ausgestaltung der Erfindung vorgesehen, dass der Speisewassertank über eine Speisewasserleitung und der Speisewasserentgaser über eine Hauptkondensatleitung in den Wasser/Dampfkreislauf eingebunden ist.

Eine besonders zweckmäßige Ausführung eines Verdampfers lässt sich dadurch ausbilden, dass der Zusatzverdampfer als Wärmetauscher ausgebildet ist. Dies bietet die Möglichkeit, das Wärmeträgermedium im Gegenstrom zu dem im Naturumlauf zirkulierenden und siedenden Speisewasser durch einen als Wärmetauscher ausgebildeten Zusatzverdampfer zu führen, wobei dann das im Zusatzverdampfer siedende Wasser in den Wärmetauscherrohren geführt und das flüssige Wärmeträgermedium in Form des Thermoöls außen an den Wärmetauscherrohren entlang läuft. Die Erfindung sieht daher weiterhin vor, dass der Zusatzverdampfer ein Wärmetauscher ist.

Da die erfindungsgemäße Ausgestaltung des Speisewasserentgasers mit angeschlossenem Speisewassertank durch Zuordnung eines Zusatzverdampfers eine sonst übliche Hilfskessel-Anlage überflüssig macht, zeichnet sich das erfindungsgemäße solarthermische Kraftwerk in Ausgestaltung dadurch aus, dass es keinen dem Wärmeträgermediumkreislauf und/oder dem Wasser/Dampfkreislauf zugeordneten, insbesondere nicht solarbeheizten, Hilfskessel aufweist.

Weiterhin ist es von Vorteil, wenn das solarthermische Kraftwerk einen Speisewassertank nach einem der Ansprüche 2 bis 3 aufweist, was die Erfindung ebenfalls vorsieht. Das solarthermische Kraftwerk weist dann die gleichen Vorteile auf, wie sie vorstehend im Zusammenhang mit dem Speisewasserentgaser erwähnt sind.

Im Rahmen eines solarthermischen Kraftwerkes, das mit einem Wärmeträgermediumkreislauf unter Einbeziehung des jeweiligen Solarfeldes ausgestattet istwird der Zusatzverdampfer mit diesem Thermoöl zu beheizen. Das erfindungsgemäße Verfahren sieht daher vor, dass der Zusatzverdampfer vom Wärmeträgermedium des Wärmeträgermediumkreislaufs beheizt wird.

Hierbei ist es dann von besonderem Vorteil, wenn das Speisewasser zwischen Speisewassertank und Zusatzverdampfer mittels Naturumlauf bewegt wird, was die Erfindung auch vorsieht. Dadurch wird es möglich, einen Entgaser für verschiedene Betriebsmodi des Solarkraftwerks zur Verfügung zu stellen, der mit seinem zugeordneten und insbesondere in der Nähe des Speisewassertanks angeordneten und vorzugsweise Thermoöl-beheizten Naturumlauf-Zusatzverdampfers permanent und hochflexibel, schnell und sicher geregelt vorgewärmtes und entgastes Speisewasser und Hilfsdampf in einer großen Massenstrom-Bandbreite für den Wasser/Dampfkreislauf des solarthermischen Kraftwerkes bereitstellen kann.

Mit dem Abzweigen eines HTF-Teilstromes ist es möglich, ohne großen regelungstechnischen und/oder konstruktiven und/oder leitungsmäßigen Aufwand eine Beheizung des Zusatzverdampfers vorzusehen.

Um den Zusatzverdampfer und damit den damit in Leitungs- und Wirkverbindung stehenden Entgaser mit Speisewassertank als multifunktionale thermische Entgaser-, Vorwärm- und Hilfsdampferzeugeranlage für den Wasser/Dampfkreislauf des solarthermischen Kraftwerkes ausbilden zu können, ist es weiterhin von Vorteil, wenn dem Zusatzverdampfer 0,5 % bis 45 % des dem Dampf/Wasserkreislauf bei Dampfturbinen-Volllast insgesamt zur Verfügung gestellten Speisewasserstroms zugeführt werden.

Hierbei besteht dann gemäß Weiterbildung der Erfindung die Möglichkeit, dass das Speisewasser des Speisewassertanks im Stand-By-Betriebsmodus des Kraftwerks durch Umlauf durch den Zusatzverdampfer auf einer Temperatur im Bereich seines Siedepunktes gehalten wird. Hierdurch steht jederzeit ausreichend warmes Speisewasser für ein zügiges Warm-Anfahren des/der Dampferzeuger(s) und der Dampfturbine(n) zur Verfügung.

Da der Zusatzverdampfer im Stand-By-Betriebsmodus des Kraftwerkes für diesen Betriebsmodus dem Wasser/Dampfkreislauf genügend Hilfsdampf zur Verfügung stellen kann, ist es dann weiterhin von Vorteil, wenn im Stand-By-Betriebsmodus keine Zuführung externen Hilfsdampfes erfolgt, wodurch sich die Erfindung ebenfalls auszeichnet. Hierbei ist der Verdampfer dann im Stand-By-Betriebsmodus mit minimalem Wärmeträgermediumdurchsatz und Kleinstleistung zu betreiben.

Mit der erfindungsgemäßen Kombination von Speisewasserentgaser, Speisewassertank und Zusatzverdampfer lässt sich neben dem Warmhalten des Speisewassers im Stand-By-Betriebsmodus des solarthermischen Kraftwerkes aber auch der Warmstart oder das Warm-Anfahren des Kraftwerkes unterstützen. Der Zusatzverdampfer kann nämlich einen Wasserdampfmassenstrom bereitstellen, der deutlich über den für ein reines Warmhalten des Speisewassers benötigten Wasserdampfmassenstrom hinausgeht. Bis zum Erreichen seiner thermischen Volllast kann der Zusatzverdampfer daher zum An- oder Hochfahren des Kraftwerks genutzt werden. Das erfindungsgemäße Verfahren sieht daher schließlich in Ausgestaltung vor, dass im Warmstart-/Warmanfahr-Modus des Kraftwerks die thermische Leistung des Zusatzverdampfers stufenlos bis zu seiner thermischen Volllast hochgefahren und dabei der Dampfdruck mittels einer Dampfdruck-Sollwert-Regelung gesteuert wird.

Nach Durchführung des Anfahrvorganges des Kraftwerkes wird dann der Zusatzverdampfer vorzugsweise nach Erreichung seines Volllastbereiches wieder zurückgefahren, wobei dann die für den Entgaser benötigte thermische Energie wie ansonsten im Wasser/Dampfkreislauf von solarthermischen Kraftwerken üblich, mittels dem Entgaser zugeführten Anzapfdampfes bereitgestellt wird. Die Erfindung zeichnet sich daher schließlich dadurch aus, dass bei Erreichen eines vorgegebenen (Frisch-)Dampfdrucks, insbesondere in der Frischdampfleitung, und/oder bei Erreichen eines bestimmten Teillastbereiches der Dampfturbine des Kraftwerks dem Entgaser Anzapfdampf aus dem Wasser/Dampfkreislauf zugeführt und der Zusatzverdampfer in einem Stand-By-Warmhaltemodus umgeschaltet und in diesem betrieben wird.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

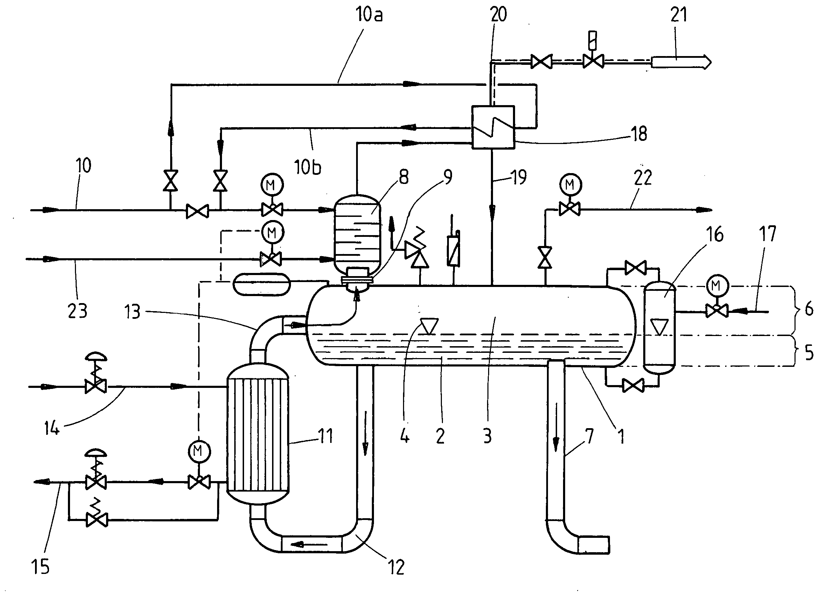

Die Erfindung ist nachstehend anhand eines Ausführungsbeispieles unter Bezugnahme auf eine zugehörige Zeichnung näher erläutert. Diese zeigt in der einzigen Figur in schematischer Darstellung die Anordnung eines erfindungsgemäßen Speisewasserentgasers mit zugeordnetem Speisewassertank und diesem zugeordnetem Zusatzverdampfer.

Die einzige Figur zeigt einen waagerecht liegend angeordneten zylindrischen Speisewasserbehälter oder Speisewassertank 1, in welchem sich bodenseitig Speisewasser 2 und im darüber ausgebildeten Bereich Sattdampf 3 befindet. Der bis zum Flüssigkeitsbadspiegel 4 mit Speisewasser 2 gefüllte Bereich des Speisewassertanks 1 wird nachstehend als Speisewasserbereich 5 und der darüber ausgebildete Bereich als Dampfbereich 6 des Speisewassertanks 1 bezeichnet. Im Speisewasserbereich 5 wird entgastes Speisewasser für den Wasser/Dampfkreislauf des nicht dargestellten, angeschlossenen solarthermischen Kraftwerks bereitgestellt und bereitgehalten. An den Wasser/Dampfkreislauf ist der Speisewassertank 1 über eine Speisewasserleitung 7 angeschlossen, durch welche dem Wasser/Dampfkreislauf in Richtung des in dem Rohr 7 dargestellten Pfeiles entgastes Speisewasser 2 zugeführt wird.

Oberhalb des Dampfbereiches 6 ist auf dem Speisewassertank 1 ein senkrecht stehender zylindrischer Entgaser 8, im vorliegenden Ausführungsbeispiel ein Rieseltassen-Entgaser, angeordnet. Er steht über eine unabsperrbar ausgebildete Flanschverbindung 9 mit dem Dampfbereich 6 des Speisewassertanks 1 in Verbindung. Im oberen Bereich des Entgasers 8 mündet in diesen die Hauptkondensatleitung 10 ein, über welche die erfindungsgemäße Entgaser-/Speisewassertank-Kombination dampfseitig stromabwärts hinter den Dampfturbinen in den Wasser/Dampfkreislauf des Kraftwerkes eingebunden ist.

Weiterhin ist dem Speisewassertank 1 ein Zusatzverdampfer 11, insbesondere ortsnah, zugeordnet und auch seitlich nahe am Speisewassertank 1 angeordnet. Der Zusatzverdampfer 11 weist eine wasserseitige Leitungsverbindung 12 zum Speisewasserbereich 5 des Speisewassertanks 1 sowie eine dampfseitige Leitungsverbindung 13 zum Dampfbereich 6 des Speisewassertanks 1 auf. Durch Beheizung des in Form eines Wärmetauschers ausgebildeten Zusatzverdampfers 11 lässt sich in den Leitungsverbindungen 12, 13 vom Speisewassertank 1 zum Zusatzverdampfer 11 und vom Zusatzverdampfer 11 zurück zum Speisewassertank 1 ein auf dem so genannten Thermosiphon-Prinzip beruhender Naturumlauf des Speisewassers 2 ausbilden. Die Beheizung des Zusatzverdampfers 11 erfolgt mittels des im Wärmeträgermediumkreislauf des zugeordneten solarthermischen Kraftwerkes zirkulierenden Wärmeträgermediums, wobei es sich im Ausführungsbeispiel um ein Thermoöl handelt. Das Wärmeträgermedium wird dem Zusatzverdampfer 1 auf (s)einem höheren Temperaturniveau über eine Zuführleitung 14 zugeführt und auf einem niedrigeren Temperaturniveau über die Abführleitung 15 wieder aus dem Zusatzverdampfer 11 heraus und dem Wärmeträgermediumkreislauf zugeführt. Der im Ausführungsbeispiel als Thermoöl-beheizter Naturumlauf-Zusatzverdampfer ausgeführte Verdampfer 11 umfasst einen Geradrohr-Wärmetauscher, in dem das durch die Zuführleitung 14 zugeführte warme Thermoöl außen an den Wärmetauscherrohren vorbei zur Abführleitung 15 geführt wird und im Gegenstrom dazu das durch die wasserseitige Leitungsverbindung 12 zugeführte Speisewasser 2 siedend und gegebenenfalls verdampfend der dampfseitigen Leitungsverbindung 13 zugeführt wird. Der Zusatzverdampfer 11 ist seitlich am oder zumindest in der Nähe des Speisewassertanks 1 montiert, so dass die Leitungsverbindungen 12, 13 relativ kurz ausgeführt sein können.

Weiterhin ist an dem Speisewassertank 1 eine senkrecht stehende Entspannungsflasche 16 angeordnet, die einenends ebenfalls eine wasserseitige Leitungsverbindung zum Speisewasserbereich 5 des Speisewassertanks 1 und anderenends eine dampfseitige Leitungsverbindung zum Dampfbereich 6 des Speisewassertanks 1 aufweist. In die Entspannungsflasche 16 mündet eine Leitung 17, durch welche von den Hochdruck-Speisewasser-Vorwärmern des Wasser/Dampfkreislaufes stammendes Heizdampf-Kondensat in die Entspannungsflasche 16 einleitbar und von da aus störungsfrei in den Speisewassertank 1 rückführbar ist.

Auf seiner dem Speisewassertank 1 abgewandten Seite ist der Entgaser 8 weiterhin leitungsmäßig mit einem Hauptkondensatgekühlten Brüdendampfkondensator 18 verbunden. Der Brüdendampfkondensator 18 ist als liegender Geradrohrwärmetauscher ausgebildet, wobei das über eine von der Hauptkondensatleitung 10 über eine abgezweigte Leitung 10a zugeführte kühlende Hauptkondensat in den Wärmetauscherrohren fließt und über eine Abzweigleitung 10b in die Hauptkondensatleitung 10 rückgeführt wird. Außen an den Wärmetauscherrohren des Brüdendampfkondensators 18 wird der im Entgaser 8 entstandene und die nicht kondensierbaren Gase, wie CO₂, O₂ oder N₂ enthaltende Brüdendampf vorbeigeführt. Hierdurch kondensieren die wasserhaltigen Teile des Brüdendampfes, die dann als Kondensat über eine Leitung 19 wieder in den Dampfbereich 6 des Speisewassertanks 1 rückgeführt werden. Die verbleibenden, nicht kondensierenden Gaskomponenten, insbesondere das zu entgasende CO₂, O₂ und N₂, werden über eine Leitung 20 als Abgas 21 abgeleitet.

Mit Hilfe des Zusatzverdampfers 11 ist es möglich, das Speisewasser 2 zu beheizen, wobei dies geregelt und gesteuert erfolgen kann, so dass mit Hilfe des Zusatzverdampfers 11 eine in einem jeweiligen Betriebsmodus des solarthermischen Kraftwerks gewünschte gezielte Verdampfung von Speisewasser erfolgen kann. Durch dieses Zusatzaggregat wird die im Übrigen vom Grundsatz her konventionell ausgebildete Entgaser/Speisewassertank-Anordnung als eine multifunktionale, thermische Entgaser-, Vorwärm- und Hilfsdampf-Erzeugeranlage ausgebildet. Diese kann für ein zügigeres und dennoch schonendes Anfahren und Abfahren des solarthermischen Kraftwerkes, d. h. dessen regulären Wasser/Dampfkreislaufes, genutzt werden. Eine bei konventionellen solarthermischen Kraftwerken sonst zu diesem Zwecke notwendige separate, und in der Regel fossilbefeuerte Hilfskessel-Anlage ist somit nicht mehr notwendig.

Die neben dem Entgaser 8 und dem Speisewassertank 1 auch den Zusatzverdampfer 11 in Form des Thermoöl-beheizten Naturumlauf-Verdampfers umfassende Kombination stellt dem Wasser/Dampfkreislauf des angeschlossenen und zugeordneten solarthermischen Kraftwerkes über die Speisewasserleitung 7 für das Warmhalten sowie für das An- und Abfahren des solarthermischen Kraftwerkes entgastes und vorgewärmtes Speisewasser in dem Speisewassertank 1 zur Verfügung. Hierbei wird je nach Betriebszustand des solarthermischen Kraftwerkes dem Speisewassertank 1 vorgewärmtes Speisewasser 2 in einer Menge entnommen und nach Durchströmen des Zusatzverdampfers 11 wieder in diesen rückgeführt, die 0,5 % bis 45 % des Durchsatzes an Speisewassermassenstrom entspricht, der dem Speisewassertank 1 in den dem Warmhalten oder Anfahren nachfolgenden oder dem Abfahren vorhergehenden ordentlichen Betriebsmodus, insbesondere bei Dampfturbinen-Volllastbetrieb, entnommen wird, bei welchem die übliche, nachstehend noch erläuterte, Vorwärmung des Speisewassers 2 mittels durch die Leitung 10 zugeführtem Hauptkondensat erfolgt.

Mit der Erfindung wird eine Kombination aus Entgaser 8, Speisewassertank 1 und Zusatzverdampfer 11 zur Verfügung gestellt, die mittels des Thermoöl-beheizten Naturumlaufverdampfers 11 permanent und hochflexibel, schnell und sicher regelbar Hilfsdampf in einer (großen) Massenstrombandbreite von 0,22 - 5kg Dampf/s für den Wasser/Dampfkreislauf bereithält.

Mit dem erfindungsgemäßen Speisewasserentgaser 8 ist zunächst einmal die Lieferung von kleinsten Hilfsdampfmassenströmen im Bereich von 0,22 - 0,25 kg Dampf/s im Stand-By-Betriebsmodus des solarthermischen Kraftwerkes möglich. In diesem Stand-By-Betriebsmodus, bei welchem der Wasser/Dampfkreislauf für den nächsten Warmstart bereitgehalten wird, fließen Kleinst-Hilfsdampf-Massenströme von 0,22 kg/s - 0,25 kg/s mittels eines eingestellten Dampfdruck-Sollwertes stabil und schnell geregelt und gesteuert vom Sattdampfbereich 6 des Speisewassertanks 1 über eine Leitung 22 als Hilfsdampf oder Fremddampf in den nicht dargestellten Hilfsdampfsammler des Wasser/Dampfkreislaufes des angeschlossenen solarthermischen Kraftwerkes und von da aus in das Sperrdampf-System der zugehörigen oder zugeordneten Dampfturbine sowie in das Treibdampfsystem der Vakuumpumpen der Evakuierungsanlage des Wasser/Dampfkreislaufes. In diesem Betriebszustand wird der Hilfsdampfsammler quasi "rückwärts" mit Hilfsdampf beliefert, da der Speisewassertank 1 mit zugeordnetem Speisewasserentgaser 8 in diesem Betriebszustand Hilfsdampf erzeugt und abgibt, aber keinen Dampf, wie er beispielsweise über die Anzapfdampfleitung 23 im ordentlichen Betriebsmodus des Kraftwerkes zugeführt wird, benötigt und konsumiert.

Gleichzeitig und parallel zur Abgabe von Hilfsdampf wird in diesem Stand-By-Betriebsmodus des Kraftwerkes das Speisewasser 2 im Speisewassertank 1 ohne Zuführung externen Hilfsdampfes von außen allein mit Hilfe des durch den Zusatzverdampfer 11 umlaufend geführten Speisewasserumlaufs warm gehalten. Da kein Dampf und damit Wasser von außen zugeführt wird, erfolgt auch kein Ansteigen des Flüssigkeitsbadspiegels 4 mit der Folge, dass irgendwann Speisewasser aus dem Speisewasserbehälter 1 abgelassen werden müsste, wie dies bei bisher konventionell betriebenen Speisewasserentgasern nach dem Stand der Technik notwendig ist. Der erfindungsgemäße Speisewasserentgaser 8 mit Speisewassertank 1 enthält Speisewasser 2, das sich auf einer Temperatur im Bereich seines Siedepunktes befindet und das dem Wasser/Dampfkreislauf über die Speisewasserleitung 7 jederzeit, beispielsweise wenn ein Anfahren von Dampferzeuger und Dampfturbine erfolgen soll, zur Verfügung gestellt werden kann.

Der Thermoöl-beheizte Naturumlauf-Verdampfer 11 wird in diesem Stand-By-Betriebsmodus des Kraftwerkes mit einem minimalen Thermoöldurchsatz von ca. 22 kg/s bei einer Kleinstleistung von ca. 0,44 MW betrieben, wobei das benötigte Thermoöl vom Rücklauf der ohnehin erforderlichen Thermoöl-Zirkulation im Wärmeträgermediumkreislauf des Kraftwerkes abgezweigt und dorthin zurückgeführt wird. Diese Abzweigung von Wärmeträgermedium zur Beheizung des Zusatzverdampfers 1 aus dem Rücklaufabschnitt des Wärmeträgermediumkreislaufes macht es möglich, dem Zusatzverdampfer 11 Wärmeträgermedium zuzuführen, ohne dass nur für diesen Zweck zusätzlich Hilfsaggregate erforderlich werden, die im ordentlichen Betriebsmodus des Kraftwerkes dann inaktiv bereitgehalten werden müssten.

Die erfindungsgemäße Kombination aus Entgaser 8, Speisewassertank 1 und Zusatzverdampfer 11 bietet aber auch Unterstützung beim Warmstart/Warmanfahren von Dampferzeuger und Dampfturbine, wenn sich das Kraftwerk in einem Warmstart/Warmanfahr-Modus befindet. In diesem Modus wird die thermische Leistung des Thermoöl-beheizten Naturumlaufverdampfers 11 von der im Stand-By-Modus eingeregelten Kleinlast (0,44 MW) stufenlos bis zu seiner thermischen Volllast (10 MW) gesteigert und dabei mittels einer Dampfdruck-Sollwert-Steuerung stabil und schnell geregelt. Bei Erreichen der thermischen Volllast im Zusatzverdampfer 11 von 10 MW wird für das zügige Dampferzeugeranfahren ca. das Zweifache der thermischen Leistung in das Hauptkondensat innerhalb der Speisewasserentgaseranlage bzw. innerhalb des Entgasers 8 übertragen, die im regulären, stationären Volllast-Betrieb des Wasser/Dampfkreislaufes übertragen wird. Die Volllast im Zusatzverdampfer 11 von 10 MW in der Endphase des Kessel- und Dampfturbinenanfahrens bedeutet das Erreichen von 200 % der nominellen Wärmeübertragungsleitung in der Speisewasser-Entgasungsanlage bzw. im Entgaser 8, die bei Dampfturbinen-Volllast erreicht wird.

Diese hohe, zweifache thermische Leistungsaufnahme des Zusatzverdampfers 11 ergibt sich auch dadurch, dass das in diesem Betriebszustand durch die Hauptkondensatleistung 10 zufließende Hauptkondensat noch kalt ist und somit nicht nur um die übliche Größenordnung von 15 bis 30 K im Entgaser 8 auf die für die thermische Entgasung notwendige Temperatur aufgeheizt werden muss, sondern in der Größenordnung von 110 bis 120 K aufgeheizt werden muss, um die für die Speisewasservorwärmung und -verdampfung notwendige Temperatur zu erhalten.

Im Rieseltassen-Entgaser 8 wird ca. das 2-fach der nominellen Wärmeübertragungsleistung umgesetzt.

In dieser Warmstart/Warm-Anfahr-Phase wird der Dampfdurchsatz in dem Dampferzeuger und in der Dampfturbine entsprechend den jeweils vorgegebenen Temperatur-Gradienten gesteigert und dem Speisewassertank 1 wird entsprechend der dem Dampferzeuger und der Dampfturbine zuzuführenden Dampfmenge mittels Speisewasserpumpen über für die Speisewasserleitung 7 vorgewärmtes Speisewasser 2 entnommen. Hierdurch sinkt das Speisewasserniveau, d. h. der Speisewasserbadspiegel 4, im Speisewassertank 1 und unterschreitet einen vorgegebenen Wasserstand-Sollwert. Hierdurch wird mittels eines Wasserstandreglers ein Regelventil geöffnet, das das Zufließen von Hauptkondensat über die Hauptkondensatleitung 10 in den Entgaser 8 bewirkt. Das in den Entgaser 8 eingetretene Hauptkondensat rieselt dann gleichmäßig von oben nach unten über die Rieseltassen des Entgasers 8, während gleichzeitig Sattdampf aus dem Dampfbereich 6 des Speisewassertankes 1 im Gegenstrom von unten nach oben durch den Entgaser strömt. Im Verlaufe des Gegenstromes kondensiert der durch den Entgaser strömende Sattdampf sukzessive im Direktkontakt mit dem Hauptkondensat und gibt dabei seine Kondensationswärme oder Verdampfungsenthalpie an das Hauptkondensat ab. Dadurch erhöht sich die Temperatur des Hauptkondensates und die darin enthaltenen, nicht kondensierbaren Gase, insbesondere CO₂, O₂ und N₂, lösen sich dadurch zwangsläufig aus dem immer heißer werdenden Hauptkondensat und entweichen mit dem so genannten Brüdendampf aus dem Entgaser 8 und werden leitungsmäßig dem Brüdendampf-Kondensator 18 zugeführt, aus welchem sie dann über die Leitung 20 als Abgas 21 aus dem Wasser/Dampfkreislauf entweichen.

Im Brüdendampf-Kondensator 18 wird der Brüdendampf mit Hilfe des in Wärmetauscherrohren geführten und über eine Leitung 10a zugeführten Hauptkondensates gekühlt und kondensiert. Der Brüdendampf kondensiert fast vollständig und wird über die Leitung 19 wasserförmig in den Speisewassertank 1 rückgeführt. Die nicht kondensierbaren Gase (CO₂, O₂, N₂) werden mit einem minimalen Rest des Brüdendampfes über die Leitung 20 als Abgas 21 in die Umgebungsluft oder Atmosphäre abgegeben.

Bei dem vorstehend beschriebenen Vorgang strömt Sattdampf aus dem Dampfbereich 6 des Speisewassertanks 1 in den Entgaser 8 ein und kondensiert dort am entgegenströmenden Hauptkondensat. Hierdurch sinkt der Dampfdruck im Dampfbereich 6 des Speisewassertanks 1, woraufhin ein Dampfdruckregler ein Regelventil in der Zuführleitung 14 öffnet, so dass dem Verdampfer 11 heißes, auf seinem höheren Temperaturniveau befindliches Wärmeträgermedium, im vorliegenden Fall Thermoöl, zugeführt oder in einer größeren Menge zugeführt wird. Hierdurch entsteht im Zusatzverdampfer 11 zwischen der Seite der Zuführleitung 14 und der Seite der Abführleitung 15 ein größerer Temperaturgradient, wodurch der über die Leitungen 12 und 13 angeschlossene Naturumlauf für das Speisewasser unmittelbar ohne Verzögerung und ohne irgendwelche fluid- und/oder thermodynamischen Hemmnisse, wie etwa unerwünschte Dampf-Implosionen, beschleunigt. In der Folge wird der durch den Zusatzverdampfer 11 geführte Speisewassermassenstrom beschleunigt, mehr Speisewasser pro Zeiteinheit verdampft, und der Dampfdruck im Dampfbereich 6 wieder erhöht. Mittels des Zusatzverdampfers 11 wird so viel Speisewasser verdampft, wie zum Erwärmen, Entgasen und Nachkochen des Hauptkondensats und zur Aufrechterhaltung des gewünschten und eingestellten Dampfdruckes im Dampfdruckbereich 6 notwendig ist.

Schließlich wird die Kombination aus Speisewasserentgaser 8, Speisewassertank 1 und Zusatzverdampfer 11 dann wieder in einem Stand-By-Modus betrieben, wenn der Dampferzeuger und die Dampfturbine ihren ordentlichen Betriebszustand erreicht haben und/oder während sich der Dampferzeuger und die Dampfturbine oder der Dampfturbinengeneratorsatz im Betriebszustand des Hochfahr-Gleichdruckmodus befinden.

Dieser Stand-By-Modus des erfindungsgemäßen Entgasers 8 wird eingestellt, sobald sich im Dampferzeuger und/oder in der Frischdampfleitung ein bestimmter, gewünschter Frischdampfdruck einstellt und die Dampfturbine einen gewünschten, bestimmten Teillastbereich erreicht hat, wobei diese Grenze vorzugsweise dann erreicht ist, wenn der an die Dampfturbine angeschlossene Generator 20 % seiner Generatorleistung erreicht hat. In diesem Falle wird dann der Stand-By-Modus des Entgasers 8 dadurch eingeleitet, dass die Heizleistung des Thermoöl-beheizten Naturumlauf-Verdampfers 11 durch Eindrosselung des zufließenden Thermoöls als Wärmeträgermedium zurückgenommen wird. Gleichzeitig strömt dann durch die Anzapfdampfleitung 23 zugeführter Heizdampf durch den Entgaser 8 und bewirkt dort die entsprechend Entgasung des entgegenströmenden Hauptkondensats. Das Hauptkondensat hat in diesem Betriebszustand des solarthermischen Kraftwerkes nun eine gegenüber dem Anfahrmodus erhöhte Temperatur, es liegt also kein "kaltes" Hauptkondensat mehr vor, da dieses durch mit Heizdampf beaufschlagte Wärmetauscher vorgewärmt werden kann. In diesem Modus ist der Zusatzverdampfer 11 mit der angeschlossenen Zuführleitung 14 so geschaltet und programmiert, dass er dann anspringt und wieder mehr thermische Leistung zur Aufheizung von Speisewasser zur Verfügung stellt, wenn es zu einem plötzlichen und nicht erwünschten Druckabfall im Entgaser 8 und/oder dem Speisewassertank 1 kommt, der nicht unverzüglich durch vermehrt durch die Leitung 23 zugeführten Anzapf- oder Heizdampf ausgeglichen wird.

Im Übrigen wird der Zusatzverdampfer 11 in diesem Verdampfer Stand-By-Betriebsmodus lediglich wiederum mit einem minimalen Thermoöl-Durchsatz von < 8 kg/s betrieben, so dass ein geringer Speisewasserumlauf erfolgt. Aufgrund des Zufließens von Wärmeträgermedium wird die Zuführleitung 14, und durch das dadurch bewirkte Umlaufen des Speisewassers wird der Zusatzverdampfer 11 mit wasserseitiger Leitungsverbindung 12 und dampfseitiger Leitungsverbindung 13 jeweils warm und auf Betriebstemperatur gehalten. Insbesondere diese Maßnahme macht es möglich, dass mittels des Zusatzverdampfers 11 kurzfristig Sattdampf erzeugt werden kann, falls im Entgaser 8 und/oder im Speisewassertank 1 der Dampfdruck abfällt.

Hierbei ist vorgesehen, dass der Sollwert eines Druckhalte-Reglers mit dem Druck-Ist-Wert im Speisewassertank 1 gleitet und diesen Ist-Wert "einfriert", wenn ein bestimmter Druckabfall-Gradient überschritten wird. Durch diese Druckhaltung werden Betriebsausfälle der Speisewasserpumpe verhindert und damit wird die Verfügbarkeit des Kraftwerksprozesses insgesamt gewährleistet und/oder erhöht.

Insgesamt werden mit der Erfindung die im Rahmen eines solarthermischen Kraftwerkes bereitgestellten Systemkomponenten Solarfeld, HTF (Heat Transfer Fluid)-System und thermischer Speicher (TES) optimal genutzt und in die Speisewasserentgasung eingebunden, so dass auf eine nach dem Stand der Technik üblicherweise erforderliche konventionelle, insbesondere fossil befeuerte, weitere Hilfskesselanlage zur Erzeugung von Hilfsdampf verzichtet werden kann.

Die im Solarfeld des solarthermischen Kraftwerkes erzeugte thermische Energie kann dem Zusatzverdampfer 11 und/oder dem Speisewasser 2 auf vier verschiedenen Wegen zur Verfügung gestellt werden:
1. Im üblichen Betrieb bei Sonnenscheineinstrahlung wird die thermische Energie über das im Solarfeld erwärmte Wärmeübertragungsmedium (Heat Transfer Fluid) direkt über die Zuführleitung 14 zugeführt.
2. In Nicht-Sonnenscheinzeiten kann aus einem thermischen Speicher (TES) thermische Energie an das Wärmeübertragungsmedium (HTF) abgegeben werden. Beispielsweise kann es sich bei dem thermischen Speicher um einen Flüssigsalz-Wärmespeicher handeln, der dann im Entlade-Modus die gespeicherte thermische Energie an das Wärmeträgermedium, im Ausführungsbeispiel Thermoöl, abgibt, welches die thermische Energie dann wiederum über die Zuleitung 14 dem Zusatzverdampfer 11 zuführt.
3. Gespeicherte thermische Energie kann als Restwärme über das Wärmeträgermedium an den Zusatzverdampfer 11 abgegeben werden. Nach Abschaltung oder Wegfall aller oben genannten Wärmequellen, kann die HTF-Masse (ca. 2000 t) aus dem Wärmeträger-Kreislauf Wärme an den Zusatzverdampfer 11 abgeben, bis sie von ca. 300 °C auf ca. 190 °C abgekühlt ist.
4. Es kann thermische Energie aus der Verbrennung von Erdgas im so genannten Heat Transfer Fluid-Heater über das Wärmeträgermedium bereitgestellt werden. Bei Unterschreitung von bestimmten HTF-Soll-Temperaturen wird je nach Betriebsmodus mit Erdgasverfeuerung das HTF auf Temperatur gebracht oder gehalten.

Die erfindungsgemäße Kombination des Entgasers 8 mit dem Speisetank 1 und dem zugeordneten Zusatzverdampfer 11 führt zu einer Reihe von weiteren Vorteilen. So ist mit diesem System ein einfacher, heiz- und regeltechnisch unproblematischer Kaltstart des Verdampfers und des Speisewasser-Entgasers aufgrund des auf dem Prinzip des Thermo-Siphon-Prinzips beruhenden Naturumlaufes des Zusatzverdampfers oder Wärmetauschers möglich. Es sind keine gesonderten Einbauten im Speisewassertank sowie keine gesonderten Dampfleitungen, komplizierte Regelsysteme etc., notwendig. Für den Betrieb des Zusatzverdampfers 11 ist es ausreichend, eine Zuführleitung 14 vom Wärmeträgermediumkreislauf abzuzweigen und eine Abführleitung 15 dorthin zurückzuführen. Zusätzliche Pumpen, um das Wärmeträgermedium durch die Leitungen 14 und 15 sowie den Zusatzverdampfer 11 zu führen, sind nicht notwendig. Die das Wärmeträgermedium im Wärmeträgermediumkreislauf umwälzenden Pumpen reichen aus, um auch das Wärmeträgermedium durch die Leitungen 14, 15 zu transportieren.

## Patentansprüche

1. Speisewasserentgaser umfassend einen Entgaser (8) mit angeschlossenem Speisewassertank (1), welche in den Wasser/Dampfkreislauf eines einen Wärmeträgermediumkreislauf mit zugeordnetem Wasser/Dampfkreislauf aufweisenden solarthermischen Kraftwerks einbindbar sind,
**dadurch gekennzeichnet,**
**dass** dem Speisewassertank (1) mindestens ein als Thermoöl-beheizter Naturumlaufverdampfer ausgebildeter Zusatzverdampfer (11) zugeordnet ist, der eine wasserseitige Leitungsverbindung (12) zum mit Speisewasser (2) gefüllten Speisewasserbereich (5) des Speisewassertanks (1) und eine dampfseitige Leitungsverbindung (13) zum über dem Speisewasserbereich (5) ausgebildeten Dampfbereich (6) des Speisewassertanks (1) aufweist und der mittels eines aus dem Wärmeträgermediumkreislauf abgezweigten Teilstroms des Wärmeträgermediums Thermoöl des Wärmeträgermediumkreislaufs beheizbar oder beheizt ist, wobei die Kombination aus Entgaser (8), Speisewassertank (1) und Zusatzverdampfer (11) regelbar Hilfsdampf in einer Massenstrombandbreite von 0,22 - 5 kg Dampf/s für den Wasser/Dampfkreislauf bereithält.

2. Speisewasserentgaser nach Anspruch 1, **dadurch gekennzeichnet, dass** der Speisewassertank (1) über eine Speisewasserleitung (7) und der Entgaser (8) über eine Hauptkondensatleitung (10) in den Wasser/Dampfkreislauf einbindbar ist.

3. Speisewasserentgaser nach Anspruch 1 oder 2, **dadurch gekennzeichnet, dass** der Zusatzverdampfer (11) ein Wärmetauscher ist.

4. Solarthermisches Kraftwerk mit einem einen Entgaser (8) mit angeschlossenem Speisewassertank (1) umfassenden Speisewasserentgaser, welche in den Wasser/Dampfkreislauf des einen Wärmeträgermediumkreislauf mit zugeordnetem Wasser/Dampfkreislauf aufweisenden Kraftwerks eingebunden sind, **dadurch gekennzeichnet, dass** dem Speisewassertank (1) mindestens ein als Thermoöl-beheizter Naturumlaufverdampfern ausgebildeter Zusatzverdampfer (11) zugeordnet ist, der eine wasserseitige Leitungsverbindung (12) zum mit Speisewasser (2) gefüllten Speisewasserbereich (5) des Speisewassertanks (1) und eine dampfseitige Leitungsverbindung (13) zum über dem Speisewasserbereich (5) ausgebildeten Dampfbereich (6) des Speisewassertanks (1) aufweist und der mittels eines aus dem Wärmeträgermediumkreislauf abgezweigten Teilstroms des Wärmeträgermediums Thermoöl des Wärmeträgermediumkreislaufs beheizbar und/oder beheizt ist, wobei die Kombination aus Entgaser (8), Speisewassertank (1) und Zusatzverdampfer (11)regelbar Hilfsdampf in einer Massenstrombandbreite von 0,22 - 5 kg Dampf/s für den Wasser/Dampfkreislauf bereithält.

5. Solarthermisches Kraftwerk nach Anspruch 4, **dadurch gekennzeichnet, dass** es keinen dem Wärmeträgermediumkreislauf oder dem Wasser/Dampfkreislauf zugeordneten nicht solarbeheizten, Hilfskessel aufweist.

6. Solarthermisches Kraftwerk nach Anspruch 4 oder 5, **dadurch gekennzeichnet, dass** es einen Speisewasserentgaser (8) nach einem der Ansprüche 2 bis 3 aufweist.

7. Verfahren zur Speisewasserentgasung und/oder Speisewassererwärmung von im Wasser/Dampfkreislauf eines solarthermischen Kraftwerks in einem Speisewassertank (1) mit Entgaser (8) bereitgestelltem Speisewasser (2), **dadurch gekennzeichnet, dass** zumindest ein Teil des Speisewassers (2) einem dem Speisewassertank (1) mit Entgaser (8) zugeordneten als Thermoöl-beheizter Naturumlaufverdampfer ausgebildeter Zusatzverdampfer (11) zugeführt wird, der eine wasserseitige Leiungsverbindung (12) zum mit Speisewasser (2) gefüllten Speisewasserbereich (5) des Speisewassertanks (1) und eine dampfseitige Leitungsverbindung (13) zum über dem Speisewasserbereich (5) ausgebildeten Dampfbereich (6) des Speisewassertanks (1) aufweist, darin verdampft und der Dampf in den Dampfbereich (6) des Speisewassertanks (1) rückgeführt wird, wobei der Zusatzverdampfer (11) von einem aus dem Wärmeträgermediumkreislauf abgezweigten Teilstrom des Wärmeträgermediums Thermoöl des Wärmeträgermediumkreislaufs beheizt wird, und wobei mittels der Kombination aus Entgaser (8), Speisewassertank (1) und Zusatzverdampfer (11) regelbar Hilfsdampf in einer Massenstrombandbreite von 0,22 - 5 kg Dampf/s für den Wasser/Dampfkreislauf bereit gehalten wird.

8. Verfahren nach Anspruch 7, **dadurch gekennzeichnet, dass** das Speisewasser (2) zwischen dem Speisewassertank (1) und dem Zusatzverdampfer (11) mittels Naturumlauf bewegt wird.

9. Verfahren nach Anspruch 7 oder 8, **dadurch gekennzeichnet, dass** dem Zusatzverdampfer (11) 0,5 bis 45 % des dem Dampf/Wasserkreislauf bei Dampfturbinen-Volllast insgesamt zur Verfügung gestellten Speisewassermassenstroms zugeführt werden.

10. Verfahren nach einem der Ansprüche 7 bis 9, **dadurch gekennzeichnet, dass** das Speisewasser (2) des Speisewassertanks (1) im Stand-By-Betriebsmodus des Kraftwerks durch Umlauf durch den Zusatzverdampfer (11) auf einer Temperatur im Bereich seines Siedepunktes gehalten wird und keine Zuführung von externem Hilfsdampf in den Entgaser (8) erfolgt.

11. Verfahren nach einem der Ansprüche 7 bis 10, **dadurch gekennzeichnet, dass** im Warmstart-/Warmanfahr-Modus des Kraftwerks die thermische Leistung des Zusatzverdampfers (11) stufenlos bis zu seiner thermischen Volllast hochgefahren und der Dampfdruck mittels einer Dampfdruck-Sollwert-Regelung gesteuert wird.

12. Verfahren nach einem der vorhergehenden Ansprüche 7-11, **dadurch gekennzeichnet, dass** bei Erreichen eines vorgegebenen (Frisch-)Dampfdruckesoder bei Erreichen eines bestimmten Teillastbereiches der Dampfturbine des Kraftwerkes dem Entgaser (8) Anzapfdampf aus dem Wasser/Dampfkreislauf zugeführt und der Zusatzverdampfer (11) in einen Stand-By-Warmhaltemodus umgeschaltet und in diesem betrieben wird.

## Claims

1. A feedwater degasifier comprising a degasifier (8) with a connected feedwater tank (1), which can be incorporated in the water/steam cycle of a solar thermal power station having a heat transfer medium circuit with an assigned water/steam cycle, **characterized in that**
the feedwater tank (1) is assigned at least one additional evaporator (11) configured as a natural-circulation evaporator heated with thermal oil, comprising a line connection (12) on the water side to the feedwater region (5) filled with feedwater (2) of the feedwater tank (1) and a line connection (13) on the steam side to the steam region (6) of the feedwater tank (1) formed above the feedwater region (5), and which can be heated and/or is heated by means of a subflow of the heat transfer medium thermal oil of the heat transfer medium circuit branched off from the heat transfer medium circuit, wherein the combination of degasifier (8), feedwater tank (1) and additional evaporator (11) provides auxiliary steam in a massflow bandwidth of 0.22 to 5 kg of steam/s for the water/steam cycle in a controllable way.

2. Feedwater degasifier according to claim 1, **characterized in that** the feedwater tank (1) can be incorporated in the water/steam cycle by way of a feedwater line (7) and the feedwater degasifier (8) can be incorporated in the water/steam cycle by way of a main condensate line (10).

3. Feedwater degasifier according to claim 1 or 2, **characterized in that** the additional evaporator (11) is a heat exchanger.

4. A solar thermal power station with a feedwater degasifier comprising a degasifier (8) with a connected feedwater tank (1), which are incorporated in the water/steam cycle of the power station having a heat transfer medium circuit with an assigned water/steam cycle, **characterized in that** the feedwater tank (1) is assigned at least one additional evaporator (11) configured as a natural-circulation evaporator heated with thermal oil, comprising a line connection (12) on the water side to the feedwater region (5) filled with feedwater (2) of the feedwater tank (1) and a line connection (13) on the steam side to the steam region (6) of the feedwater tank (1) formed above the feedwater region (5), and which can be heated and/or is heated by means of a subflow of the heat transfer medium thermal oil of the heat transfer medium circuit branched off from the heat transfer medium circuit, wherein the combination of degasifier (8), feedwater tank (1) and additional evaporator (11) provides auxiliary steam in a massflow bandwidth of 0.22 to 5 kg of steam/s for the water/steam cycle in a controllable way.

5. Solar thermal power station according to claim 4, **characterized in that** it does not have an auxiliary boiler which is not solar-heated, assigned to the heat transfer medium circuit or the water/steam cycle.

6. Solar thermal power station according to claim 4 or 5, **characterized in that** it has a feedwater degasifier (8) according to any one of claims 2 to 3.

7. A method for feedwater degasification and/or feedwater heating of feedwater (2) provided in the water/steam cycle of a solar thermal power station in a feedwater tank (1) with a degasifier (8), **characterized in that** at least part of the feedwater (2) is fed to an additional evaporator (11) assigned to the feedwater tank (1) with degasifier (8) configured as a natural-circulation evaporator heated with thermal oil, comprising a line connection (12) on the water side to the feedwater region (5) filled with feedwater (2) of the feedwater tank (1) and a line connection (13) on the steam side to the steam region (6) of the feedwater tank (1) formed above the feedwater region (5), is evaporated therein and the steam is returned into the steam region (6) of the feedwater tank (1), wherein the additional evaporator (11) is heated by means of a subflow of the heat transfer medium thermal oil of the heat transfer medium circuit branched off from the heat transfer medium circuit, and wherein auxiliary steam is provided in a massflow bandwidth of 0.22 to 5 kg of steam/s for the water/steam cycle in a controllable way by means of the combination of the degasifier (8), the feedwater tank (1) and the additional evaporator (11) .

8. Method according to claim 7, **characterized in that** the feedwater (2) is moved between the feedwater tank (1) and the additional evaporator (11) by means of natural circulation.

9. Method according to claim 7 or 8, **characterized in that** the additional evaporator (11) is fed 0.5% to 45% of the feedwater mass flow made available altogether to the steam/water cycle at full steam-turbine load.

10. Method according to any one of claims 7 to 9, **characterized in that** the feedwater (2) of the feedwater tank (1) is kept at a temperature in the range of its boiling point in the standby operating mode of the power station by circulation through the additional evaporator (11), and that no feeding of external auxiliary steam into the degasifier (8) takes place.

11. Method according to any one of claims 7 to 10, **characterized in that**, in the hot starting/hot starting-up mode of the power station, the thermal output of the additional evaporator (11) is run up steplessly to its full thermal load and the steam pressure is controlled by means of a steam-pressure set point control.

12. Method according to any one of the preceding claims 7 to 11, **characterized in that**, when a predetermined (live) steam pressure is reached or when a specific part-load range of the steam turbine of the power station is reached, bled steam from the water/steam cycle is fed to the degasifier (8) and the additional evaporator (11) is switched over to a standby temperature-maintaining mode and is operated in this mode.

## Revendications

1. Dégazeur d'eau d'alimentation comprenant un dégazeur (8) avec un réservoir d'eau alimentation (1) raccordé, qui peuvent être intégrés dans le circuit eau/vapeur d'une centrale thermique solaire comprenant un circuit à fluide caloporteur avec circuit eau/vapeur correspondant,
**caractérisé en ce que**
au réservoir d'eau d'alimentation (1) correspond au moins un évaporateur supplémentaire (11) conçu comme un évaporateur à circulation naturelle chauffé par de l'huile thermique, qui comprend une liaison côté eau (12) vers la partie à eau d'alimentation (5) remplie d'eau d'alimentation (2) du réservoir d'eau d'alimentation (1) et une liaison côté vapeur (13) vers la partie à vapeur (6), prévue au-dessus de la partie à eau d'alimentation (5), du réservoir d'eau d'alimentation (1) et qui peut être chauffé ou qui est chauffé au moyen d'un flux partiel dévié à partir du circuit à fluide caloporteur du fluide caloporteur huile thermique du circuit à fluide caloporteur, la combinaison du dégazeur (8), du réservoir d'eau d'alimentation (1) et de l'évaporateur supplémentaire (11) produisant, de manière régulable, de la vapeur auxiliaire dans une plage de débits massiques de 0,22 à 5 kg de vapeur / s pour le circuit eau/vapeur.

2. Dégazeur d'eau d'alimentation selon la revendication 1, **caractérisé en ce que** le réservoir d'eau d'alimentation (1) peut être intégré dans le circuit eau/vapeur par l'intermédiaire d'une conduite d'eau d'alimentation (7) et le dégazeur (8) peut être intégré dans le circuit eau/vapeur par l'intermédiaire d'une conduite de condensat principale (10).

3. Dégazeur d'eau d'alimentation selon la revendication 1 ou 2, **caractérisé en ce que** l'évaporateur supplémentaire (11) est un échangeur thermique.

4. Centrale thermique solaire avec un dégazeur d'eau d'alimentation comprenant un dégazeur (8) avec un réservoir d'eau d'alimentation (1) raccordé, qui sont intégrés dans le circuit eau/vapeur d'une centrale comprenant un circuit à fluide caloporteur avec circuit eau/vapeur correspondant, **caractérisé en ce que**, au réservoir d'eau d'alimentation (1) correspond au moins un évaporateur supplémentaire (11) conçu comme un évaporateur à circulation naturelle chauffé par de l'huile thermique, qui comprend une liaison côté eau (12) vers la partie à eau d'alimentation (5) remplie d'eau d'alimentation (2) du réservoir d'eau d'alimentation (1) et une liaison côté vapeur (13) vers la partie à vapeur (6), prévue au-dessus de la partie à eau d'alimentation (5), du réservoir d'eau d'alimentation (1) et qui peut être chauffé ou qui est chauffé au moyen d'un flux partiel dévié à partir du circuit à fluide caloporteur du fluide caloporteur huile thermique du circuit à fluide caloporteur, la combinaison du dégazeur (8), du réservoir d'eau d'alimentation (1) et de l'évaporateur supplémentaire (11) produisant, de manière régulable, de la vapeur auxiliaire dans une plage de débits massiques de 0,22 à 5 kg de vapeur / s pour le circuit eau/vapeur.

5. Centrale thermique solaire selon la revendication 4, **caractérisée en ce qu'**elle comprend une chaudière auxiliaire non chauffée de manière solaire, correspondant au circuit à fluide caloporteur ou au circuit eau/vapeur.

6. Centrale thermique solaire selon la revendication 4 ou 5, **caractérisée en ce qu'**elle comprend un dégazeur d'eau d'alimentation (8) selon l'une des revendications 2 à 3.

7. Procédé de dégazage d'eau d'alimentation et/ou de chauffage d'eau d'alimentation d'une eau d'alimentation (2) produite dans le circuit eau/vapeur d'une centrale thermique solaire dans un réservoir d'eau d'alimentation (1) avec un dégazeur (8), **caractérisé en ce qu'**au moins une partie de l'eau d'alimentation (2) est introduite dans un évaporateur supplémentaire (11) conçu comme un évaporateur à circulation naturelle chauffé par de l'huile thermique, correspondant au réservoir d'eau d'alimentation (1) avec dégazeur (8), qui comprend une liaison côté eau (12) vers la partie à eau d'alimentation (5) remplie d'eau d'alimentation (2) du réservoir d'eau d'alimentation (1) et une liaison côté vapeur (13) vers la partie à vapeur (6), prévue au-dessus de la partie à eau d'alimentation (5), du réservoir d'eau d'alimentation (1), y est évaporée à l'intérieur et la vapeur est retournée dans la partie de vapeur (6) du réservoir d'eau d'alimentation (1), l'évaporateur supplémentaire (11) étant chauffé par un flux partiel, dévié à partir du circuit à fluide caloporteur, du fluide caloporteur huile thermique du circuit à fluide caloporteur et la combinaison du dégazeur (8), du réservoir d'eau d'alimentation (1) et de l'évaporateur supplémentaire (11) produisant, de manière régulable, de la vapeur auxiliaire dans une plage de débits massiques de 0,22 à 5 kg de vapeur / s pour le circuit eau/vapeur.

8. Procédé selon la revendication 7, **caractérisé en ce que** l'eau d'alimentation (2) est déplacée au moyen d'une circulation naturelle entre le réservoir d'alimentation (1) et l'évaporateur supplémentaire (11).

9. Procédé selon la revendication 7 ou 8, **caractérisé en ce que** dans l'évaporateur supplémentaire (11) sont introduits de 0,5 à 45% du flux massique total d'eau d'alimentation mis à disposition du circuit eau/vapeur lorsque les turbines à gaz sont à pleine charge.

10. Procédé selon l'une des revendications 7 à 9, **caractérisé en ce que** l'eau d'alimentation (2) du réservoir d'eau d'alimentation (1) est maintenue, dans le mode de fonctionnement en standby de la centrale, par la circulation à travers l'évaporateur supplémentaire (11), à une température au niveau de son point d'ébullition et aucune introduction de vapeur auxiliaire externe n'a lieu dans le dégazeur (8).

11. Procédé selon l'une des revendications 7 à 10, **caractérisé en ce que**, dans le mode de démarrage à chaud de la centrale, la puissance thermique de l'évaporateur supplémentaire (11) est démarré progressivement jusqu'à sa pleine charge thermique et la pression de la vapeur est contrôlée au moins d'une régulation de la valeur de consigne de la pression de vapeur.

12. Procédé selon l'une des revendications 7 à 11, **caractérisé en ce que**, lorsqu'une pression de vapeur (fraîche) ou lorsqu'une zone de charge partielle déterminée du la turbine à gaz de la centrale est atteinte, de la vapeur de soutirage provenant du circuit eau/vapeur est introduite dans le dégazeur (8) et l'évaporateur supplémentaire (11) est commuté dans un mode de maintien au chaud de standby et utilisé dans celui-ci.
